# EUROPÄISCHE PATENTSCHRIFT

(11) **EP 1 312 456 B1**
(45) Veröffentlichungstag und Bekanntmachung des Hinweises auf die Patenterteilung: **02.02.2005**
(21) Anmeldenummer: 02025703.6
(22) Anmeldetag: 15.11.2002
(51) Int. Cl.: B29C 45/26, B29C 45/36, B29C 45/16, B29C 45/14

(54) **Verfahren zum Herstellen von Mikro-Fluidikkomponenten**
Method for the manufacture of micro-fluidic components
Procédé pour la préparation des composants micro-fluidiques

(30) Priorität: 19.11.2001 DE 10156767
(43) Veröffentlichungstag der Anmeldung: 21.05.2003
(73) Patentinhaber: RKT Rodinger Kunststoff-Technik GmbH, 93426 Roding (DE)
(72) Erfinder: Groth, Rainer, 93426 Roding (DE)
(74) Vertreter: Patentanwälte Leinweber & Zimmermann

(56) Entgegenhaltungen:
- EP-A- 0 269 345
- EP-A- 0 350 813
- EP-A- 0 654 338
- DE-A- 19 850 046
- GB-A- 388 662
- MICHAELI W ET AL: "SPRITZGIESSEN VON MIKROSTRUKTUREN INJECTION MOULDING MICROSTRUCTURES" F&M FEINWERKTECHNIK MIKROTECHNIK MIKROELEKTRONIK, CARL-HANSER VERLAG, DE, Bd. 104, Nr. 9, 1. September 1996 (1996-09-01), Seiten 641-643, XP000636589 ISSN: 0944-1018
- PATENT ABSTRACTS OF JAPAN vol. 010, no. 342 (M-536), 19. November 1986 (1986-11-19) -& JP 61 144314 A (KERU KK), 2. Juli 1986 (1986-07-02)

## Beschreibung

Diese Erfindung betrifft ein Verfahren zum Herstellen von Mikro-Fluidikkomponenten mit mindestens einem Hohlraum, wie etwa einem Mikrokanal, einer Kapillare, einer Mischkammer, einer Separierstrecke, einer Mischstrecke od. dgl. nach dem Oberbegriff des Patentanspruchs 1. Dabei kann es sich bei den in den Hohlräumen der Mikro-Fluidikkomponenten aufzunehmenden Fluiden um Gase oder Flüssigkeiten handeln.

Verfahren zur Herstellung von Lüftungselementen sind in der EP 0 350 813 A2 angegeben. Darüber hinaus ist in der EP 0 654 338 A1 ein Spritzgießverfahren zum Herstellen von zylindrischen Körpern angegeben.

Mikro-Fluidikkomponenten werden beispielsweise in der Medizintechnik und/oder Analytik eingesetzt. Dabei sind die Mikrostrukturen derartiger Komponenten Bestandteile von Mikro-Reaktoren, Mikromischern (-mixer), Mikrodosiersystemen, Mikropumpensystemen und/oder Mikro-Sensoren o.ä. Die dabei eingesetzten Mikrostrukturen umfassen Hohlräume mit Abmessungen im Bereich von 20 µm oder weniger bis zu 200 µm. Derartige Komponenten können nicht zufriedenstellend gereinigt werden, so daß sie nur für einen einmaligen Gebrauch geeignet sind. Herkömmlicherweise werden Mikro-Fluidikkomponenten der gerade beschriebenen Art aus Quarzglas hergestellt. Der im Zusammenhang mit der Herstellung entsprechender Glaskomponenten entstehende Aufwand führt dazu, daß herkömmliche Mikro-Fluidikkomponenten vergleichsweise teuer sind, insbesondere EUR 250,- oder mehr kosten. Im Hinblick auf diese Probleme wurden bereits aus Kunststoffen hergestellte Mikro-Fluidikkomponenten vorgeschlagen. Dabei bereitet die Herstellung von Hohlräumen mit Abmessungen im µm-Bereich jedoch erhebliche Probleme. Zur Lösung dieser Probleme werden in der US 6,176,962, US 6,123,798, US 6,054,034, US 5,958,694 und US 5,900,130 Verfahren zum Herstellen von Mikro-Fluidikkomponenten vorgeschlagen, bei denen die einzelnen Mikro-Fluidikkomponenten aus mindestens zwei Bauelementen gebildet sind, von denen eines beispielsweise in einem Spritzgießverfahren mit einer dem mindestens einen Hohlraum entsprechenden Oberflächenprofilierung hergestellt wird und das andere auf die die Oberftächenprofilierung aufweisende Begrenzungsfläche des ersten Bauelementes aufgebracht wird, um so abgeschlossene Hohlräume für die gewünschten Mikrostrukturen bereitzustellen. Bei den bekannten Verfahren werden die einzelnen zur Bildung der Mikro-Fluidikkomponenten benötigten Bauelemente nach ihrer Fertigstellung in der Spritzgießvorrichtung in ein Fügewerkzeug eingespannt, erwärmt und auf diese Weise fest miteinander verbunden. Wenngleich mit dem vorstehend beschriebenen Verfahren hergestellte Mikro-Fluidikkomponenten vergleichsweise kostengünstig bereitgestellt werden können, sind die Herstellungskosten immer noch so hoch, daß Mikro-Fluidikkomponenten für den Masseneinsatz kaum benutzt werden. Verfahren nach dem Oberbegriff des Patentanspruchs 1 sind in der DE 198 50 046 A1 angegeben. Bei den in dieser Schrift beschriebenen Verfahren wird ein Kemkörper zur Bildung eines Formteils umspritzt und danach aus dem Formteil herausgelöst.

Angesichts dieser Probleme im Stand der Technik liegt der Erfindung die Aufgabe zugrunde, Verfahren zum Herstellen von Mikro-Fluidikkomponenten bereitzustellen, mit denen die Herstellungskosten weiter reduziert werden können.

Erfindungsgemäß wird diese Aufgabe gelöst durch das in Patentanspruch 1 angegebene Verfahren zum Herstellen von Mikro-Fluidikkomponenten mit mindestens einem Hohlraum, bei dem Kunststoff in eine Werkzeugkavität einer Spritzgießvorrichtung gespritzt wird, bei dem in der Werkzeugkavität ein erstes Bauelement aus Kunststoff mit einer dem mindestens einen Hohlraum entsprechenden Oberflächenprofilierung hergestellt wird, bei dem der Hohlraum in der Spritzgießvorrichtung selbst dadurch gebildet wird, daß mindestens ein weiteres Bauelement in der Spritzgießvorrichtung auf die die Oberflächenprofilierung aufweisende Begrenzungsfläche des ersten Bauelementes aufgebracht wird, wobei die Oberflächenprofilierung in einer ebenen Begrenzungsfläche des ersten Bauelementes gebildet und mit einer im wesentlichen ebenen Begrenzungsfläche des mindestens einen weiteren Bauelementes abgedeckt wird, dadurch gekennzeichnet, daß das mindestens eine weitere Bauelement nach oder vor dem Spritzgießen hergestellt, dem ersten Bauteil im Werkzeug zugeführt und mit diesem verbunden wird, oder das mindestens eine weitere Bauelement im gleichen Prozeßschritt gespritzt wird, wobei vorzugsweise der Werkzeugeinsatz für das erste Bauelement in der Auswerferseite und der Werkzeugeinsatz für das mindestens eine weitere Bauelement in der Spritzseite des Spritzgußwerkzeuges angeordnet ist und das mindestens eine weitere Bauelement nach dem Spritzgießen vorzugsweise im noch warmen Zustand und auch noch innerhalb des Werkzeugeinsatzes innerhalb des geöffneten Werkzeuges parallel zu der die Oberflächenprofilierung aufweisenden Begrenzungsfläche des ersten Bauelementes positioniert wird sowie ein Heizelement in das geöffnete Werkzeug gefahren wird und mit einer ersten Heizfläche die die Oberflächenprofilierung aufweisende Begrenzungsfläche des ersten Blauelementes und mit einer weiteren Heizfläche mindestens eine Begrenzungsfläche des weiteren Bauelementes, z.B. mittels Wärmeleitung, Wärmestrahlung und/oder Mikrowellen, erwärmt wird.

Das erste Bauelement wird aus Kunststoff, z.B. Polystryrol, Polycarbonat und/oder PMMA, hergestellt.

Durch diese Weiterbildung bekannter Verfahren kann die Herstellung von Mikro-Fluidikkomponenten weiter vereinfacht werden, weil keine Geräte oder Personen mehr für den Transfer der einzelnen Bauelemente der Mikro-Fluidikkomponenten vom Spritzgießwerkzeug zum Fügewerkzeug bereitgestellt werden müssen. Vielmehr kann das Zusammenfügen der einzelnen Bauelemente im Spritzgießwerkzeug selbst erfolgen, wodurch die Herstellungskosten deutlich reduziert werden.

Eine besonders hohe Abmessungsgenauigkeit kann erreicht werden, wenn die Oberflächenprofilierung in einer im wesentlichen ebenen Begrenzungsfläche gebildet und mit einer im wesentlichen ebenen Begrenzungsfläche des mindestens einen weiteren Bauelementes abgedeckt wird.

Das die Oberflächenprofilierung aufweisende Bauelement kann in Großserienproduktion besonders kostengünstig durch Spritzgießen hergestellt werden. Dabei wird die Oberflächenprofilierung zweckmäßigerweise durch Verwendung eines erfindungsgemäßen, eine der Oberflächenproflierung entsprechende Profilierung aufweisenden Werkzeugeinsatzes beim Spritzgießen erzeugt. Der die Mikroprofilierung aufweisende Werkzeugeinsatz kann z.B. durch mikromechanische Bearbeitung oder die LIGA-Technik hergestellt werden.

Zum Herstellen einer dichten Verbindung zwischen dem ersten Bauelement und dem mindestens einen weiteren Bauelement wird die die Profilierung aufweisende Begrenzungsfläche des ersten Bauelementes und/oder die auf diese Begrenzungsfläche aufzubringende Begrenzungsfläche des mindestens einen weiteren Bauelementes zweckmäßigerweise vor und/oder während dem Vorgang des Aufbringens des weiteren Bauelementes erwärmt, um so die Bauelemente im Bereich ihrer Kontaktflächen aufzuweichen, wodurch eine besonders zuverlässige dichte Verbindung zwischen diesen Bauelementen bewirkt werden kann.

Im Hinblick auf die gewünschte Kostenreduzierung hat es sich als günstig erwiesen, wenn das mindestens eine weitere Bauelement ebenfalls durch Spritzgießen hergestellt wird. Wenngleich auch an den Einsatz solcher Verfahren gedacht ist, bei denen die einzelnen Bauelemente getrennt voneinander hergestellt werden, hat es sich als besonders günstig erwiesen, wenn das erste Bauelement und das mindestens eine weitere Bauelement im gleichen Prozeß gespritzt werden, wobei vorzugsweise der Werkzeugeinsatz für das erste Bauelement in der Auswerferseite und der Werkzeugeinsatz für das mindestens eine weitere Bauelement in der Spritzseite des Spritzgußwerkzeuges angeordnet ist. Die Erfindung ist allerdings nicht auf den Einsatz derartiger Verfahren eingeschränkt. Vielmehr ist auch an den Einsatz von solchen Verfahren gedacht, bei denen der Werkzeugeinsatz für das erste Bauelement in der Spritzseite des Spritzgußwerkzeuges und der Werkzeugeinsatz für das weitere Bauelement in der Auswerfseite des Werkzeugeinsatzes angeordnet sind.

Falls sowohl das erste Bauelement als auch das mindestens eine weitere Bauelement im gleichen Prozeßschritt gespritzt werden, kann das mindestens eine weitere Bauelement nach dem Spritzgießen vorzugsweise im noch warmen Zustand und auch noch innerhalb des Werkzeugeinsatzes innerhalb des dann geöffneten Werkzeugs parallel zu der die Oberflächenprofilierung aufweisenden Begrenzungsfläche des ersten Bauelementes positioniert werden, um so das Zusammenfügen dieser Bauelemente vorzubereiten.

Wie eingangs bereits erläutert, werden das erste Bauelement und/oder das mindestens eine weitere Bauelement vor dem Zusammenfügen zweckmäßigerweise erwärmt, um so die Haftungseigenschaften zu verbessern. Bei der zuletzt beschriebenen Verfahrensvariante, bei der die beiden Bauelemente noch innerhalb des geöffneten Spritzgußwerkzeuges exakt positioniert werden, so daß das mindestens eine weitere Bauelement genau parallel und gegenüber dem ersten Bauelement positioniert ist, kann dieser Vorgang des Erwärmens besonders einfach ausgeführt werden, wenn ein Heizelement in das geöffnete Werkzeug gefahren wird und mit einer ersten Heizfläche die die Oberflächenprofilierung aufweisende Begrenzungsfläche des ersten Bauelementes und mit einer weiteren Heizfläche mindestens eine Begrenzungsfläche des weiteren Bauelementes erwärmt wird. Dazu wird zweckmäßigerweise ein kontaktlos wirkendes Heizelement benutzt, bei dem die Erwärmung mittels Wärmestrahlung erfolgt. Nach einer produkt- und kunststoffspezifisch definierten Aufwärmzeit und -temperatur fährt das Heizelement aus dem geöffneten Werkzeug wieder heraus. Dann kann das Werkzeug wieder geschlossen werden und die erwärmte Oberfläche des mindestens einen weiteren Bauelementes (Deckels) wird auf die erwärmte und die profilierte Oberfläche aufweisende Begrenzungsfläche des ersten Bauelementes gedrückt. Durch diesen "Deckelungsprozeß" werden die Mikrostrukturen verschlossen und gegeneinander abgedichtet.

Bei einer anderen Ausführungsform der Erfindung wird zumindest auf einen Teil der die Oberflächenprofilierung aufweisenden Begrenzungsfläche ein weiteres Bauelement in Form einer Folie aufgebracht.

Bei dem erfindungsgemäßen Verfahren wird vorzugsweise eine Profilierung mit einer Tiefe und/oder Breite von weniger als 500 µm, vorzugsweise weniger als 300 µm, besonders bevorzugt weniger als 200 um hergestellt. Dabei kann die Profilierung eine Tiefe und/oder Breite von mehr als 10, vorzugsweise mehr als 15, besonders bevorzugt mehr als 20 µm aufweisen.

## Patentansprüche

1. Verfahren zum Herstellen von Mikro-Fluidikkomponenten mit mindestens einem Hohlraum, bei dem Kunststoff in eine Werkzeugkavität einer Spritzgießvorrichtung gespritzt wird, bei dem in der Werkzeugkavität ein erstes Bauelement aus Kunststoff mit einer dem mindestens einen Hohlraum entsprechenden Oberflächenprofilierung hergestellt wird, bei dem der Hohlraum in der Spritzgießvorrichtung selbst dadurch gebildet wird, daß mindestens ein weiteres Bauelement in der Spritzgießvorrichtung auf die die Oberflächenprofilierung aufweisende Begrenzungsfläche des ersten Bauelementes aufgebracht wird, wobei die Oberflächenprofilierung in einer ebenen Begrenzungsfläche des ersten Bauelementes gebildet und mit einer im wesentlichen ebenen Begrenzungsfläche des mindestens einen weiteren Bauelementes abgedeckt wird, **dadurch gekennzeichnet, daß** das mindestens eine weitere Bauelement nach oder vor dem Spritzgießen hergestellt, dem ersten Bauteil im Werkzeug zugeführt und mit diesem verbunden wird, oder das mindestens eine weitere Bauelement im gleichen Prozeßschritt gespritzt wird, wobei vorzugsweise der Werkzeugeinsatz für das erste Bauelement in der Auswerferseite und der Werkzeugeinsatz für das mindestens eine weitere Bauelement in der Spritzseite des Spritzgußwerkzeuges angeordnet ist und das mindestens eine weitere Bauelement nach dem Spritzgießen vorzugsweise im noch warmen Zustand und auch noch innerhalb des Werkzeugeinsatzes innerhalb des geöffneten Werkzeuges parallel zu der die Oberflächenprofilierung aufweisenden Begrenzungsfläche des ersten Bauelementes positioniert wird sowie ein Heizelement in das geöffnete Werkzeug gefahren wird und mit einer ersten Heizfläche die die Oberflächenprofilierung aufweisende Begrenzungsfläche des ersten Bauelementes und mit einer weiteren Heizfläche mindestens eine Begrenzungsfläche des weiteren Bauelementes, z.B. mittels Wärmeleitung, Wärmestrahlung und/oder Mikrowellen, erwärmt wird.

2. Verfahren nach Anspruch 1, **dadurch gekennzeichnet, daß** das erste Bauelement aus Polystyrol, Polycarbonat und/oder PMMA hergestellt wird.

3. Verfahren nach Anspruch 1 oder 2, **dadurch gekennzeichnet, daß** die Oberflächenprofilierung durch Verwendung eines eine der Oberflächenprofilierung entsprechende Profilierung aufweisenden Werkzeugeinsatzes beim Spritzgießen erzeugt wird.

4. Verfahren nach einem der Ansprüche 1 bis 3, **dadurch gekennzeichnet, daß** die die Profilierung aufweisende Begrenzungsfläche des ersten Bauelementes und/oder die auf diese Begrenzungsfläche aufzubringende Begrenzungsfläche des mindestens einen weiteren Bauelementes vor und/oder während dem Aufbringen des weiteren Bauelementes erwärmt wird.

5. Verfahren nach einem der Ansprüche 1 bis 4, **dadurch gekennzeichnet, daß** zumindest auf einem Teil der die Oberflächenprofilierung aufweisenden Begrenzungsfläche ein weiteres Bauelement in Form einer Folie aufgebracht wird.

6. Verfahren nach einem der Ansprüche 1 bis 5, **dadurch gekennzeichnet, daß** eine Profilierung mit einer Tiefe und/oder Breite von weniger als 500 µm und mehr als 10 µm hergestellt wird.

## Claims

1. A method for the manufacture of micro-fluidic components having at least one hollow chamber, wherein plastics material is injected into a tool cavity of an injection-moulding device, a first structural component made of plastics material and having a surface profile corresponding to the at least one hollow chamber is produced in the tool cavity, and the hollow chamber is formed in the injection-moulding device itself, by bringing at least one further structural component in the injection-moulding device into contact with the surface profile-exhibiting boundary area, the surface profile being formed in a planar boundary area of the first structural component and covered with a substantially planar boundary area of the at least one further structural component, **characterised in that** the at least one further structural component is produced subsequently or prior to the injection moulding and is brought to the first structural component in the tool and joined thereto, or **in that** the at least one further structural component is injected in the same step of the process, wherein, preferably, the tool insert for the first structural component is arranged in the ejector side of the injection-moulding tool and the tool insert for the at least one further structural component in the injection side thereof, and, after injection moulding, preferably in the still-warm state, and still within the tool insert within the opened tool, the at least one further structural component is positioned parallel to the surface profile-exhibiting boundary area of the first structural component, and a heating element is driven into the opened tool and the surface profile-exhibiting boundary area of the first structural component is warmed, e.g. by means of heat conduction, heat irradiation and/or microwaves, with a first heating area, and at least one boundary area of the further structural component with a further heating area.

2. A method according to Claim 1, **characterised in that** the first structural component is made of polystyrene, polycarbonate and/or PMMA.

3. A method according to Claim 1 or 2, **characterised in that** the surface profile is produced during the injection moulding with the use of a tool insert with a profile corresponding to the surface profile.

4. A method according to any one of Claims 1 to 3, **characterised in that** the profile-exhibiting boundary area of the first structural component and/or the boundary area of the at least one further structural component, which boundary area is to be brought into contact with the former boundary area, is warmed during the contacting of the further structural component.

5. A method according to any one of Claims 1 to 4, **characterised in that** a further structural component in the form of a foil is brought into contact with a part of the boundary area exhibiting the surface profile.

6. A method according to any one of Claims 1 to 5, **characterised in that** a profile having a depth and/or width of less than 500 µm and more than 10 µm is produced.

## Revendications

1. Procédé pour fabriquer des composants microfluidiques, comportant au moins une cavité, procédé dans lequel une matière plastique est injectée dans une cavité de moule d'un équipement de moulage par injection, dans lequel un premier composant en matière plastique, comportant un profil superficiel correspondant à celui d'au moins une cavité, est fabriqué dans la cavité du moule, la cavité de l'équipement de moulage par injection étant pour elle formée de telle sorte qu'au moins un autre composant soit, dans l'équipement de moulage par injection, appliqué sur la surface de contact, comportant le profil de surface, du premier composant, le profil de surface étant formé dans une surface de contact plane du premier élément, et étant recouverte par une surface de contact, essentiellement plane, d'au moins un autre composant, **caractérisé en ce qu'**au moins un autre composant est fabriqué avant ou après le moulage par injection, est envoyé au premier composant se trouvant dans le moule et est assemblé à ce dernier, ou encore un autre composant est injecté dans la même étape du procédé, auquel cas de préférence une empreinte rapportée destinée au premier composant est disposée côté éjection, et l'empreinte rapportée destinée à au moins un autre composant est disposée sur le côté injection de l'équipement de moulage par injection, et au moins un autre composant est, après le moulage par injection, de préférence encore à l'état chaud, est encore à l'intérieur de l'empreinte rapportée, positionné à l'intérieur du moule ouvert, parallèlement à la surface de contact, comportant le profil de surface, du premier composant, et de même un élément chauffant est introduit dans le moule chauffé, une première surface chauffante assurant le chauffage de la surface de contact, comportant le profil de surface, du premier composant, une autre surface chauffante assurant le chauffage d'au moins une surface de contact de l'autre composant, par exemple par conduction thermique, rayonnement thermique et/ou par des micro-ondes.

2. Procédé selon la revendication 1, **caractérisé en ce que** le premier composant est fabriqué en polystyrène, polycarbonate et/ou PMMA.

3. Procédé selon la revendication 1 ou 2, **caractérisé en ce que** le profil de surface est produit par utilisation, lors du moulage par injection, d'une empreinte rapportée présentant un profil correspondant au profil de surface.

4. Procédé selon l'une des revendications 1 à 3, **caractérisé en ce que** la surface de contact, comportant le profil du premier composant, et/ou la surface de contact, destinée à être appliquée sur cette surface de contact, d'au moins un autre composant, sont chauffés avant et/ou après application de l'autre composant.

5. Procédé selon l'une des revendications 1 à 4, **caractérisé en ce qu'**un autre composant est, sous forme d'une feuille, appliqué au moins sur une partie de la surface de contact comportant le profil de surface.

6. Procédé selon l'une des revendications 1 à 5, **caractérisé en ce qu'**il permet de fabriquer un profil ayant une profondeur et/ou une largeur inférieure à 500 µm et supérieure à 10 µm.
